Europäisches Patentamt

European Patent Office

Office européen des brevets

(19)

(11) Veröffentlichungsnummer: **0 006 142**
**B1**

(12) # EUROPÄISCHE PATENTSCHRIFT

(45) Veröffentlichungstag der Patentschrift:
**12.05.82**

(51) Int. Cl.³: **G 11 B 5/02**, G 11 B 15/04,
**H 04 N 5/782**

(21) Anmeldenummer: **79101569.6**

(22) Anmeldetag: **22.05.79**

(54) Schaltungsanordnung zum Schutz von auf einem magnetischen Aufzeichnungsträger gespeicherten Daten.

(30) Priorität: **20.06.78 DE 2827028**

(43) Veröffentlichungstag der Anmeldung:
**09.01.80 Patentblatt 80/1**

(45) Bekanntmachung des Hinweises auf die Patenterteilung:
**12.05.82 Patentblatt 82/19**

(84) Benannte Vertragsstaaten:
**AT BE CH FR IT NL**

(56) Entgegenhaltungen:
**DD-A-91 521**
**DE-B-2 055 334**

(73) Patentinhaber: **SIEMENS AKTIENGESELLSCHAFT**
**Berlin und München, Postfach 22 02 61,**
**D-8000 München 22 (DE)**

(72) Erfinder: **Gottwald, Winfried, Kirchplatz 6b,**
**D-8033 Martinsried (DE)**
Erfinder: **Braun, Klaus, Dipl.-Phys., Franz-Reber-Weg 4,**
**D-8000 München 71 (DE)**

## Schaltungsanordnung zum Schutz von auf einem magnetischen Aufzeichnungsträger gespeicherten Daten

Die Erfindung bezieht sich auf eine Schaltungsanordnung zum Schutz von auf einem magnetischen Aufzeichnungsträger insbesondere Magnetband gespeicherten Daten gegen Einwirken des Lösch- bzw. Schreibkopfes beim Ein- und Ausschalten der Gerätestromversorgung, wobei Löschstromschalter bzw. Schreibverstärker über logische Schaltungen gesteuert werden.

Bei jeder Magnetbandspule besteht die Möglichkeit, einen sogenannten Schreibring einzulegen. Mit Hilfe einer Abtasteinrichtung im Magnetbandgerät wird die Anwesenheit des Schreibringes überprüft. Bei eingelegtem Schreibring können die auf dem Magnetband gespeicherten Daten gelöscht und überschrieben werden.

Bei herausgenommenem Schreibring sind die auf Magnetband gespeicherten Daten wirksam gegen Löschen, Überschreiben, Einwirkungen bei Netzausfall und Ein- und Ausschalten der Gerätestromversorgung infolge eines Gerätefehlers oder manueller Eingriffe während des Betriebes gesichert. Auf diese Weise werden aber nur Programm- und Stammbänder geschützt. Die Bandspulen der Arbeitsbänder tragen nämlich stets einen Schreibring. Tritt einer der obengenannten Betriebsfehler auf, und ist das Gerät mit einer Bandspule geladen, die einen Schreibring trägt, können unkontrollierte Ströme durch den Schreib- und Löschkopf fließen. Dadurch wird die gespeicherte Information von beiden Köpfen partiell gelöscht.

Hinzu kommt, daß nach jedem Schreibvorgang der Schreibkopf eine Remanenz aufweist, die ausreicht, eine gespeicherte Information bei einem anschließenden Lesevorgang anzulöschen; d. h., die höherharmonischen Anteile des Signals werden bedämpft. Dies führt zu Verzerrungen bzw. Phasenfehlern beim Bewerten der Lesesignale. Um diese Nachteile zu vermeiden, wird der Schreibkopf nach jedem Schreibvorgang, auf den ein Lesevorgang folgt, automatisch entmagnetisiert. Im Betriebsfehlerfall ist ein solches automatisches Entmagnetisieren nicht möglich. Wird ein Magnetbandgerät, das durch eine Betriebsstörung ausgefallen ist, mit einem Band geladen, das nur gelesen werden soll, führt die Remanenz zu den oben geschilderten Nachteilen. Die Entnahme des Schreibrings bietet gegen diese Folgeerscheinung keinen Schutz. Damit sind also auch Programm- und Stammbänder indirekt gefährdet.

Der unkontrollierte Stromfluß durch den Schreib- und Löschkopf im Betriebsfehlerfall ist durch folgende Gegebenheiten bedingt:

a) Die verschiedenen Betriebsspannungen der Gerätestromversorgung werden gleichzeitig ein- und ausgeschaltet und erreichen die jeweiligen Endwerte in Abhängigkeit von der Belastung. Dies bedeutet für den Schreibverstärker und den Löschstromschalter, daß sich die Logikschaltungen, abhängig von der Logikspannung, in einer instabilen Phase befinden, während die Spannungen für die Endstufe des Schreibverstärkers und des Löschstromschalters beim Einschalten bereits den Endwert erreicht haben und beim Ausschalten ihren Wert noch haben. Der unkontrollierte Stromfluß durch den Schreib- und Löschkopf findet während der instabilen Phase der Logikschaltungen statt.

b) Die direkte Verwendung eines Logiksignals, wie z. B. des Signals »Master reset«, für die Sperrung des Schreibverstärkers und Löschstromschalters ist zu dem kritischen Zeitpunkt nicht möglich, da das Signal über mindestens ein Gatter geführt wird und somit selbst instabil ist.

c) Die Verwendung eines Relaiskontakts für die Sperrung des Schreibverstärkers und Löschstromschalters ist für den Ausschaltvorgang bzw. Netzausfall ungeeignet, da die Abfallzeit zu groß ist.

Bisher waren den Magnetbandgeräten komfortable, aufwendige Stromversorgungen zugeordnet, die bei Netzausfall bzw. Ein- und Ausschaltvorgängen eine vorgegebene Schaltfolge der einzelnen Spannungen einhalten. Die Reihenfolge ist dabei so gewählt, daß die Versorgungsspannung für die Logikschaltungen vor allen anderen Spannungen eingeschaltet und nach allen anderen ausgeschaltet wird. Damit ist im Gerät ein bistabiler Zustand der Versorgungsspannung für die Logikschaltungen gewährleistet, während sich die übrigen Spannungen in der Übergangsphase befinden.

Einrichtungen dieser Art haben aber den Nachteil des sehr großen Aufwandes und der damit verbundenen hohen Kosten.

Aus der deutschen Auslegeschrift 2 055 334 ist außerdem eine Schaltung zur Endaktivierung eines Aufzeichnungs-Vorspannungsoszillators eines in zwei Magnetband-Laufrichtungen arbeitenden Magnetbandgerätes vor der Erregung eines zur Umkehr der Magnetband-Laufrichtung dienenden Umkehrsolenoids und vor der Umschaltung eines Aufzeichnungskopfes, wobei eine die Magnetbandbewegung feststellende Schaltstufe verwendet wird, welche ein Signal liefert, wenn die Magnetbandbewegung eine vorgegebene Geschwindigkeit unterschreitet, bekannt. Mit dieser Schaltung ist es aber nicht möglich, die obengenannten Probleme zu lösen, nämlich gespeicherte Daten gegen Einwirkung des Lösch- bzw. Schreibkopfes beim Ein- und Ausschalten der Gerätestromversorgung zu schützen, wenn Löschstromschalter bzw. Schreibverstärker über logische Schaltungen gesteuert werden.

Der Erfindung lag daher die Aufgabe zugrunde, eine Schaltungsanordnung zu schaffen, die mit wesentlich geringerem Aufwand unkontrollierte Ströme durch die Schreib- und Löschköpfe eines Magnetbandgerätes sicher vermeidet. Erfindungsgemäß wird dies durch einen Komparator erreicht, dessen Versorgungsspannungen ihren Nennwert außer im normalen Betrieb auch dann aufweisen, wenn beim Ein- oder Ausschalten der Gerätestromversorgung die logischen Schaltungen den instabilen Bereich durchlaufen, und der ein die Löschstromschalter bzw. Schreibverstärker sperrendes Ausgangssignal erzeugt, wenn die Versorgungsspannung für die logischen Schaltungen unter einem Referenzwert liegt.

Eine wegen ihres geringen Aufwandes besonders vorteilhafte Schaltungsanordnung wird dadurch erzielt, daß dem Referenzwerteingang des Komparators (K) ein Summierer (R1, R2) vorgeschaltet ist, dessen einem Eingang ein Sperrsignal (E) zugeführt wird und dessen anderer Eingang an einer Versorgungsspannung (+U) des Komparators (K) liegt, und daß das Sperrsignal zur Sperrung der Löschstromschalter bzw. Schreibverstärker über den Komparator einen den Nennwert der Versorgungsspannung ($U_{Log}$) der logischen Schaltungen überschreitenden maximalen Referenzwert ($U_{REF}$max) erzeugt.

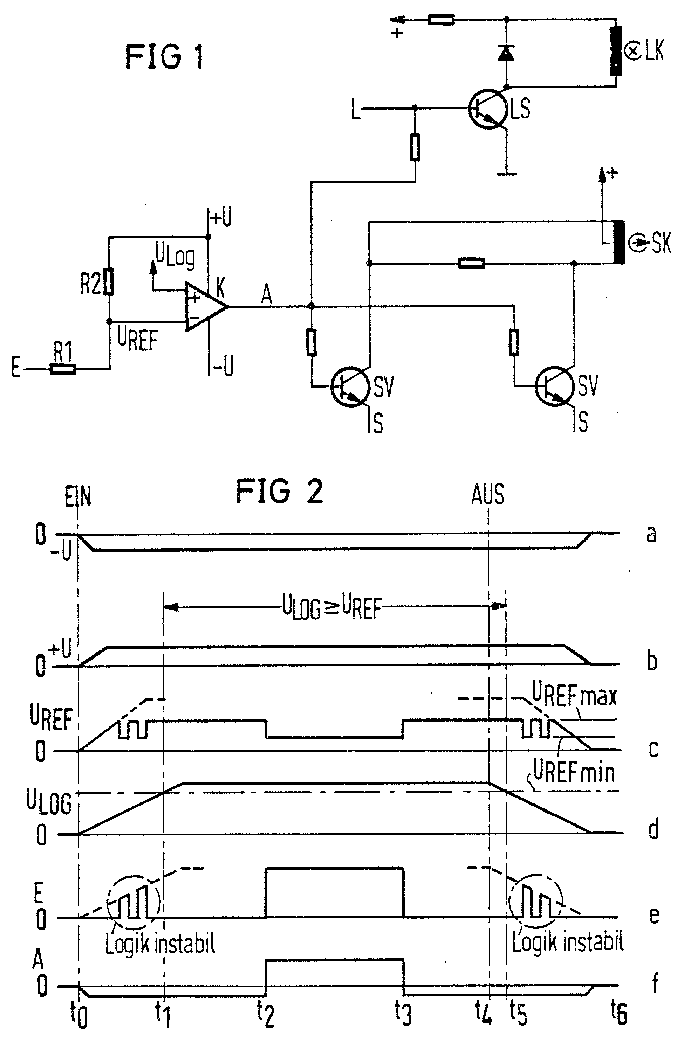

Weitere Einzelheiten der Erfindung ergeben sich aus der nachfolgenden Beschreibung eines Ausführungsbeispiels der erfindungsgemäßen Schaltungsanordnung in Verbindung mit den Fig. 1 und 2, bei denen Fig. 1 in vereinfachter Darstellung die Anwendung einer erfindungsgemäßen Schaltungsanordnung und Fig. 2 ein Diagramm der in Verbindung mit der erfindungsgemäßen Schaltungsanordnung wesentlichen Spannung zeigt.

Fig. 1 zeigt einen Löschkopf LK und einen Schreibkopf SK, wie sie in üblicher Weise in Magnetbandgeräten Anwendung finden. Der Löschkopf wird über einen Löschstromschalter LS abhängig von einem an seinem Eingang L liegenden Signal aufgesteuert bzw. gesperrt. Der Schreibkopf SK wird durch die Schreibverstärkerendstufe SV, hier in bekannter Weise zweifach vorhanden, mit Hilfe von Signalen S angesteuert, die von, der Einfachheit halber nicht dargestellten, Vorverstärkerstufen kommen.

Des weiteren ist ein Komparator K vorgesehen, mit dessen Hilfe ein Signal A erzeugt wird (Fig. 2, Zeile f). Der Komparator K bildet das Signal A durch einen Vergleich der Versorgungsspannung $U_{Log}$ (Fig. 2, Zeile d) für die logischen Schaltungen des Gerätes mit einer Referenzspannung $U_{REF}$ (Fig. 2, Zeile e). Das Signal A sperrt den Schreibverstärker SV und den Löschstromschalter LS immer dann, wenn die Versorgungsspannung für die logischen Schaltungen des Gerätes unter einem festgelegten Minimalwert liegt. Wesentlich dabei ist, daß die Betriebsspannungen +U und −U (Fig. 2, Zeilen a+b) für den Komparator K und die Referenzspannung $U_{REF}$ bei einem Einschaltvorgang ihren jeweiligen Nennwert erreichen bevor die logischen Schaltungen in ihre instabile Phase geraten bzw. bei einem Ausschaltvorgang ihren Nennwert so lange behalten, bis die instabile Phase der logischen Schaltungen abgeklungen ist.

Eine besonders elegante Ausführungsform der erfindungsgemäßen Schaltung erreicht man dann, wenn die Referenzspannung $U_{REF}$ aus der Betriebsspannung +U für den Komparator K und aus einem logischen Signal E abgeleitet wird, das in seinem einem Zustand den Schreib- oder Lösch- oder Entmagnetisierungsstatus und in einem anderen Zustand die Sperrfunktion für den Schreibverstärker SV und den Löschstromschalter LS beinhaltet. Zu diesem Zweck ist bei der in Fig. 1 dargestellten Schaltungsanordnung der negative Eingang des Komparators K über einen Widerstand R1 mit einer Leitung verbunden, die das Signal E führt, und andererseits über einen Widerstand R2 mit der Versorgungsspannung +U des Komparators.

Hiermit läßt sich folgende Wirkungsweise erzielen, die anhand der Diagramme von Fig. 2 näher erläutert wird:

Bei normalem Betrieb wird im aktiven Zustand, d. h., wenn das Eingangssignal E den Schreiboder Lösch- oder Entmagnetisierungsstatus beinhaltet, der Spannungsteiler R1/R2 z. B. an die Spannung null Volt gelegt (Zeile e, $t_2−t_3$). Dann herrscht an dem negativen Eingang des Komparators K die Referenzspannung $U_{REF}$ min. Wenn in diesem Augenblick die Versorgungsspannung für die logischen Schaltungen $U_{Log}$ bereits den Wert $U_{REF}$ min überschritten hat (Zeile d, $t_1−t_5$), dann führt dies dazu, daß am Ausgang des Komparators K ein Signal A entsteht, welches sowohl den Löschstromschalter LS als auch die Endstufen des Schreibverstärkers SV freigibt (Zeile f, $t_2−t_3$). Im inaktiven Zustand (Zeile e, $t_1−t_2$, $t_3−t_5$), d. h., wenn das Eingangssignal E die Sperrfunktion für die Endstufe des Schreibverstärkers SV und den Löschstromschalter LS enthält, nimmt die Referenzspannung $U_{REF}$ die Betriebsspannung +U des Komparators K, d. h. den Wert $U_{REF}$ max an. Wenn auch in diesem Fall die Versorgungsspannung $U_{Log}$ für die logischen Schaltungen des Gerätes bereits ihren Endwert erreicht hat (Zeile d, $t_1−t_2$, $t_3−t_5$), entsteht am Ausgang des Komparators K ein Ausgangssignal A, welches sowohl den Löschstromschalter LS als auch die Endstufen des Schreibverstärkers SV sperrt (Zeile f, $t_1−t_2$, $t_3−t_5$).

Diese Betriebsweise im normalen Betriebszustand, insbesondere die Freigabe des Löschstromschalters L bzw. der Endstufen des Schreibverstärkers SV wird jedoch immer dann blockiert, wenn die Versorgungsspannung $U_{Log}$ für die logischen Schaltungen des Gerätes den vorgegebenen Minimalwert von $U_{REF}$, d. h. $U_{REF}$ min unterschreitet bzw. noch nicht überschritten hat. Dies tritt besonders beim Einschalten und Ausschalten von Geräten oder bei Störungen des Betriebes ein. Als Beispiel für einen solchen Fall zeigt Zeile e im Zeitraum $t_0−t_1$ bzw. $t_5−t_6$ den instabilen Zustand der logischen Schaltungen beim Ein- und Ausschalten. Während dieser ganzen Zeitdauer ist die Versorgungsspannung $U_{Log}$ für die logischen Schaltun-

gen des Gerätes (Zeile d, $t_0-t_1$ und $t_5-t_6$) aber niedriger als der Minimalwert von $U_{REF}$, d. h. $U_{REF}$ min. Die Folge davon ist, daß unabhängig vom logischen Zustand des Eingangssignals E (Zeile e) am Ausgang des Komparators stets ein Signal A (Zeile f, $t_0-t_1$, $t_5-t_6$) erzeugt wird, welches die Schreibverstärker SV und den Löschstromschalter LS sperrt.

### Liste der Bezugszeichen

| | |
|---|---|
| LS | Löschstromschalter |
| SV | Schreibverstärker |
| L | Eingang des Löschstromschalters |
| S | Signal für Schreibverstärker |
| A | Ausgangssignal des Komparators |
| K | Komparator |
| $U_{Log}$ | Versorgungsspannung für die logischen Schaltungen des Gerätes |
| $U_{REF}$ | Referenzspannung für den Komparator |
| $+U$, $-U$ | Betriebsspannungen des Komparators |
| E | logisches Signal |
| R1, R2 | ohmsche Widerstände |
| $U_{REF}$ min | Minimalwert der Referenzspannung |
| $U_{REF}$ max | Maximalwert der Referenzspannung |
| LK | Löschkopf |
| SK | Schreibkopf |

### Patentansprüche

1. Schaltungsanordnung zum Schutz von auf einem magnetischen Aufzeichnungsträger, insbesondere Magnetband, gespeicherten Daten gegen Einwirken des Lösch- bzw. Schreibkopfes beim Ein- und Ausschalten der Gerätestromversorgung, wobei Löschstromschalter bzw. Schreibverstärker über logische Schaltungen gesteuert werden, gekennzeichnet durch einen Komparator (K), dessen Versorgungsspannungen ($+U$, $-U$) ihren Nennwert außer im normalen Betrieb auch dann aufweisen, wenn beim Ein- oder Ausschalten der Gerätestromversorgung die logischen Schaltungen den instabilen Bereich durchlaufen, und der ein die Löschstromschalter (LS) bzw. Schreibverstärker (SV) sperrendes Ausgangssignal (A) erzeugt, wenn die Versorgungsspannung ($U_{Log}$) für die logischen Schaltungen unter einem Referenzwert ($U_{REF}$ min) liegt.

2. Schaltungsanordnung nach Anspruch 1, dadurch gekennzeichnet, daß dem Referenzwerteingang des Komparators (K) ein Summierer (R1, R2) vorgeschaltet ist, dessen einem Eingang ein Sperrsignal (E) zugeführt wird und dessen anderer Eingang an einer Versorgungsspannung ($+U$) des Komparators (K) liegt, und daß das Sperrsignal zur Sperrung der Löschstromschalter bzw. Schreibverstärker über den Komparator einen den Nennwert der Versorgungsspannung ($U_{Log}$) der logischen Schaltungen überschreitenden maximalen Referenzwert ($U_{REF}$ max) erzeugt.

3. Schaltungsanordnung nach Anspruch 1 oder 2, dadurch gekennzeichnet, daß von dem Schreibverstärker nur die Endstufe gesperrt wird.

### Claims

1. Circuit arrangement for the protection of items of data, which are stored on a magnetic data carrier, in particular magnetic tape, against the influence of the erasing and printing head when switching on and off the current supply of the device, wherein the erasing current switch and the printing amplifier are controlled by means of logic circuits, characterised by a comparator (K) whose supply voltages ($+U$, $-U$) have their normal value, as well as in normal operation, also when the logic circuits go through the unstable region in the event of switching on or off the current supply of the device, and which comparator produces an output signal (A) which blocks the erasing current switch (LS) and printing amplifier (SV), if the supply voltage ($U_{Log}$) for the logic circuits lies under a reference value ($U_{REF}$ min).

2. Circuit arrangement as claimed in claim 1, characterised in that a summation amplifier (R1, R2) whose one input is fed with an inhibiting signal (E) and whose other input is connected to a supply voltage ($-U$) of the comparator (K), is connected preceding the reference value input of the comparator (K), and that the inhibiting signal produces a maximum reference value ($U_{REF}$ max), which exceeds the nominal value of the supply voltage ($U_{Log}$) of the logic circuits, via the comparator in order to block the erasing current switch and printing amplifier.

3. Circuit arrangement as claimed in claim 1 or 2, characterised in that only the end stage of the printing amplifier is blocked.

### Revendications

1. Montage pour protéger des données mémorisées sur un support magnétique d'enregistrement, plus particulièrement sur une bande magnétique contre l'action d'une tête d'effacement ou d'écriture lors du branchement et du débranchement de l'alimentation en courant de l'appareil, des commutateurs du courant d'effacement et des amplificateurs d'écriture étant commandés par l'intermédiaire de circuits logiques, caractérisé par un comparateur (K) dont les tensions d'alimentation ($+U$, $-U$) possèdent leur valeur nominale non seulement pendant le fonctionnement normal, mais aussi lorsque les circuits logiques passent par la plage instable au branchement ou au débranchement du courant d'alimentation de l'appareil, et qui produit un signal de sortie (A) qui bloque ou inhibe les commutateurs du courant d'effacement (LS) ou les amplificateurs d'écriture (SV) lorsque la tension d'alimentation ($U_{Log}$) pour les

circuits logiques se situe en dessous d'une valeur de référence ($U_{REF}$ min).

2. Montage selon la revendication 1, caractérisé par le fait qu'en amont de l'entrée du comparateur (K) pour la valeur de référence est monté un additionneur (R1, R2) à l'une des entrées duquel est appliqué un signal de blocage ou d'inhibition (E) alors que son autre entrée est reliée à une tension d'alimentation (+U) du comparateur (K), et que, pour bloquer les commutateurs du courant d'effacement ou les amplificateurs d'écriture, le signal de blocage produit, par l'intermédiaire du comparateur (K), une valeur de référence maximum ($U_{REF}$ max) qui dépasse la valeur nominale de la tension d'alimentation ($U_{Log}$) des circuits logiques.

3. Montage selon la revendication 1 ou 2, caractérisé par le fait que seul l'étage final de l'amplificateur d'écriture est bloqué.

0 006 142

FIG 1

FIG 2

a

b

c

d

e

f

Logik instabil

Logik instabil

7